# EUROPEAN PATENT APPLICATION

(11) **EP 4 732 730 A1**
(43) Date of publication of application: **29.04.2026**
(21) Application number: 25210819.6
(22) Date of filing: 23.10.2025
(51) Int. Cl.: A47K 17/02, B60N 3/02, B64D 11/02

(54) **LAVATORIES FOR PASSENGERS WITH REDUCED MOBILITY AND USE OF SUCH A LAVATORY**

(30) Priority: 24.10.2024 DE 102024131092
(71) Applicant: Airbus Operations GmbH, 21129 Hamburg (DE)
(72) Inventor: VÖTTER, Axel, 21129 Hamburg (DE)
(74) Representative: LKGLOBAL Partnerschaftsgesellschaft mbB

(57) **Abstract**

The present invention relates to lavatories on board an aircraft. In order to provide lavatories with a facilitated use for persons with reduced mobility, a lavatory (10) of an aircraft cabin comprises at least a first lavatory space (12) with a toilet (14), a housing structure (16) enclosing the lavatory space at least partly and a bracket arrangement (18) for a temporary mount of an upper support (20) for a user sitting on the toilet. The housing structure comprises at least one housing segment (22) of the group of: a first lateral wall segment (24), a second lateral wall segment (26), a front wall segment (28), a rear wall segment (30) and a lavatory ceiling segment (32). The bracket arrangement comprises at least two brackets (34) that are fixedly attached on the at least one housing segment such that the upper support can be temporarily mounted in a support position such that it is arranged above a user's head when sitting on the toilet.

## Description

### FIELD OF THE INVENTION

The present invention relates to the use of lavatories by passengers with reduced mobility. The present invention relates in particular to a lavatory of an aircraft cabin, to an aircraft and to a method for temporarily modifying a lavatory of an aircraft for a use by passengers with reduced mobility.

### BACKGROUND OF THE INVENTION

On board of aircrafts, lavatories are commonly provided for being used by passengers during flight. In order to use as much space as possible for passenger seats, lavatories should be as small as possible. However, small lavatories providing minimized space may not allow to be used by persons with reduced mobility (PRM), like persons sitting in a wheelchair. As an example, WO 2011/101385 A2 provides a lavatory arrangement with two adjacent lavatories and a common movable partition wall that can be folded away to provide an enlarged lavatory space for use by persons having limited mobility. However, among aircraft operators, an interest exists in offering flight service for persons with reduced mobility with an increasing level of comfort and minimum impact on cabin layout.

### SUMMARY OF THE INVENTION

There may thus be a need to provide further solutions for lavatories with a facilitated use for persons with reduced mobility.

The object of the present invention is solved by the subject-matter of the independent claims; further embodiments are incorporated in the dependent claims. It should be noted that the following described aspects of the invention apply also for the lavatory of an aircraft cabin, for the aircraft and for the method for temporarily modifying a lavatory of an aircraft for a use by passengers with reduced mobility.

According to the present invention, a lavatory of an aircraft cabin is provided. The lavatory comprises at least a first lavatory space with a toilet, a housing structure enclosing the lavatory space at least partly and a bracket arrangement for a temporary mount of an upper support for a user sitting on the toilet. The housing structure comprises at least one housing segment of the group of: a first lateral wall segment, a second lateral wall segment, a front wall segment, a rear wall segment and a lavatory ceiling segment. The bracket arrangement comprises at least two brackets that are fixedly attached on the at least one housing segment such that the upper support can be temporarily mounted in a support position such that it is arranged above a user's head when sitting on the toilet.

As an effect, an additional support can be provided when needed, e.g. for persons with reduced mobility. The additional support does not occupy space when the support is not needed. This means facilitation for the users who prefer to use the additional support, while still allowing the most efficient use of the available space.

In an example, the housing structure comprises at one of the housing segments and the at least two brackets are fixedly attached on the one housing segment, for example the ceiling segment.

In an example, the housing structure comprises at least two of the housing segments and the at least two brackets are fixedly attached on the at least two housing segments, for example on two of the lateral wall segments, or on one of the lateral wall segments and the ceiling segment.

In another example, the brackets provide a pivoting bearing for holding levers or arms of a handrail. The handrail is pivotably mounted and can be pivoted from a parking position in the ceiling area or wall area into the use position, for example by a downward picoting motion.

According to an example, the lavatory further comprises the upper support for a user sitting on the toilet. The upper support is provided as a handrail that can be releasably connected to the bracket arrangement. As an option, at least a main portion of the handrail runs in an essentially horizontal manner when the handrail is temporarily mounted. As another option, the main portion of the handrail runs transverse to a direction of the toilet when the handrail is temporarily mounted. As a further option, the main portion is held in a torque proof manner when the handrail is temporarily mounted.

As an advantage, an easy to mount support is provided that also provides intuitive handling and use.

According to an example, in a first option, i) one of the at least two brackets is mounted to the first lateral wall segment and the other one of the at least two brackets is mounted to the second lateral wall segment. The upper support is spanning across the lavatory space.

As an advantage, the support forces can be transmitted into the sidewall panels.

In a second option, ii) one of the at least two brackets is mounted to the first or second lateral wall segment, and the other one of the at least two brackets is mounted to the lavatory ceiling segment. The upper support is spanning across a part of the lavatory space.

This variation allows to provide shelfs or other functional lavatory equipment like mirrors on a lateral side, while the rail does not obstruct these when temporarily mounted.

In a third option, iii) one of the at least two brackets is mounted to the lavatory ceiling, and the other one of the at least two brackets is also mounted to the lavatory ceiling segment. The upper support is spanning across a part of the lavatory space.

This variation allows to leave the side panels untouched while only modifying the upper panel, i.e. the ceiling portion of the lavatory.

According to an example, the bracket arrangement is configured for temporarily mounting the handrail in at last two different heights.

As an advantage, a most suitable position can be chosen to address different user, i.e. passenger sizes.

According to an example, the bracket arrangement comprises a movable support for the handrail. The handrail is movable between a parking position and the support position. The handrail can be fixed in the support position.

This allows a facilitated handling for the temporal use.

According to an example, the upper support comprises a support bar that can be releasably connected to the bracket arrangement. In a first option, i) a secondary rail section is attached to the support bar. The secondary rail section runs aligned above the toilet when temporarily mounted.

Thus, further gripping portions are provided for increased support options.

In a second option, in addition or alternatively, ii) a hanging handle portion is suspended from the support bar.

This provides an additional handle that provides support in an additional height which means even more support options for the user.

According to an example, the lavatory further comprises a second lavatory space. An at least partly movable partition wall is provided between the first and the second lavatory space. The partition wall is designed to be brought to an opening position in which a separation between the first lavatory space and the second lavatory space is cancelled to form a common enlarged lavatory space. The upper support is configured to span from the space of the first lavatory space at least partly into the space of the second lavatory space.

The enlarged lavatory space is providing more space which allows e.g. the use and handling of a wheelchair, e.g. an onboard wheelchair, inside the lavatory. The enlarged lavatory space provides the advantage that a transfer from the wheelchair to the toilet seat is possible within the lavatory space. The upper support spanning across the enlarged lavatory space facilitates the transfer, since it runs along the movement path, but without hindering the transfer due to being arranged above the user.

According to an example, the upper support comprises a handrail spanning across the complete width of the common enlarged lavatory space. The handrail is curved such that, along its extension, it is arranged in different depths of the common enlarged lavatory space.

Thus, the support follows closer the movement path. This provides the advantage of an easier support for the user.

According to the present invention, an aircraft is provided. The aircraft comprises a fuselage enclosing a cabin structure. The cabin structure comprises a lavatory arrangement. The lavatory arrangement comprises at least one lavatory according to one of the preceding examples.

According to the present invention, also a method for temporarily modifying a lavatory of an aircraft for a use by passengers with reduced mobility is provided. The method comprises the following steps:
- Providing: at least a first lavatory space with a toilet; and a housing structure enclosing the lavatory space at least partly, the housing structure comprising two housing segments of the group of: a first lateral wall segment, a second lateral wall segment, a front wall segment, a rear wall segment and a lavatory ceiling segment;
- Providing a bracket arrangement for a temporary mount of an upper support for a user sitting on the toilet, the bracket arrangement comprising at least two brackets that are fixedly attached on the two housing segments; and
- Temporarily mounting the upper support in a support position such that it is arranged above a user's head when sitting on the toilet.

According to an aspect, a support is provided that is installed only when needed, e.g. by for persons with reduced mobility. The supporting function is relying on two aspects: Holders are mounted in a fixed manner, and a support like a handlebar or rail can be put in place in a temporal manner only on demand. This provides an easy handling and transforming the lavatory from a standard lavatory into an upgraded lavatory that is temporarily customized for the use by a passenger or other person with reduced mobility.

The holders are permanently attached to the lavatory wall or other housing surfaces. The holders have a shape that allows the handrail to be inserted and removed without tools. To prevent unintended removal, the handrail can be latched.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1a schematically shows a plan view of an example of a lavatory with a bracket arrangement for a temporary mount of an upper support for a user sitting on the toilet.
Fig. 1b schematically shows the example of Fig. 1a with a temporarily mounted handrail as the upper support.
Fig. 2a schematically shows a plan view of an example of a lavatory having two adjacent lavatory spaces separated by an at least partly removable partition wall with a bracket arrangement for a temporary mount of an upper support for a user sitting on the toilet.
Fig. 2b schematically shows the example of Fig. 2a with a temporarily mounted handrail as the upper support.
Fig. 3 shows a perspective view of another example of a lavatory with a temporarily mounted handrail as the upper support.
Fig. 4 shows a perspective view of the lavatory of Fig. 3 with another example of a temporarily mounted handrail as the upper support.
Fig. 5 shows a perspective view of a lavatory with a plurality of brackets for temporarily mounting the handrail as the upper support in different heights.
Fig. 6 shows a plan view of an example of a lavatory having a curved handrail as the upper support.
Fig. 7a shows a plan view of another example of a lavatory having a main rail and secondary rail portions plus a hanging handle.
Fig. 7b shows the hanging handle of Fig. 7a in more detail.
Fig. 8a shows a plan view of another example of a lavatory having a main rail and movable secondary rail portions.
Fig. 8b shows the movable secondary rail portions of Fig. 8a in more detail.
Fig. 9 shows a cross section of an aircraft with an example of a lavatory with a bracket arrangement for a temporary mount of an upper support for a user sitting on the toilet.
Fig. 10 shows basic steps of an example of a method for temporarily modifying a lavatory of an aircraft for a use by passengers with reduced mobility.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

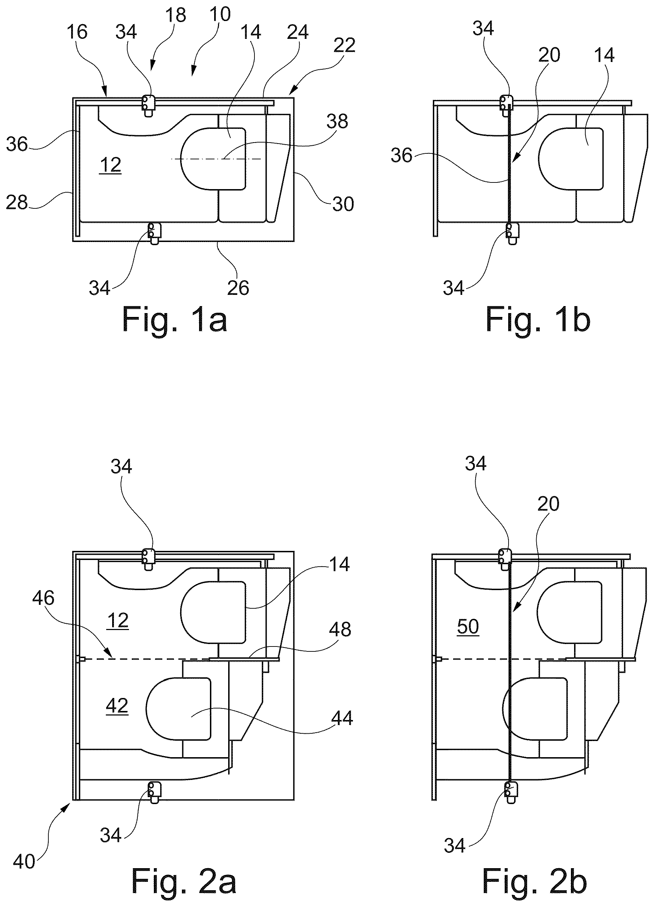

Fig. 1a schematically shows a plan view of an example of a lavatory 10 of an aircraft cabin. The lavatory 10 comprises at least a first lavatory space 12 with a toilet 14, a housing structure 16 enclosing the lavatory space 12 at least partly and a bracket arrangement 18 for a temporary mount of an upper support 20 (see Fig. 1b) for a user sitting on the toilet 14. The housing structure 16 comprises at least one housing segment 22 of the group of: a first lateral wall segment 24, a second lateral wall segment 26, a front wall segment 28, a rear wall segment 30 and a lavatory ceiling segment 32. The bracket arrangement 18 comprises at least two brackets 34 that are fixedly attached on the at least one housing segment 22 such that the upper support 20 can be temporarily mounted in a support position such that it is arranged above a user's head when sitting on the toilet 14.

In a first example, the housing structure 12 comprises at one of the housing segments 22 and the at least two brackets 34 are fixedly attached on the one housing segment, for example the ceiling segment 32.

In an example, the housing structure 12 comprises at least two of the housing segments 22 and the at least two brackets 34 are fixedly attached on the at least two housing segments 22, for example on two of the lateral wall segments 24, 26, or on one of the lateral wall segments 22 or 26 and the ceiling segment 32.

The term "lavatory space" relates to a separated room in which sanitary functions like a toilet, washbasin or the like are provided. The lavatory space 12 can also be referred to as lavatory compartment, lavatory room, toilet compartment, toilet space, toilet room, or toilet space, or lavatory interior. The lavatory space 12 relates to a restroom provided on board an aircraft.

The term "toilet" relates to the toilet 14 with e.g. a toilet bowl, a shroud and a toilet seat, and an optional toilet cover or toilet lid.

The term "housing structure" relates to the enclosure of the lavatory space 12. The housing structure 16 can also be referred to as lavatory walls, or monument walls.

The term "housing segments" relates to the wall or ceiling parts that form the housing of the lavatory 10.

The term "lateral wall" relates to wall portions enclosing the lavatory space on a lateral side when viewed from an aisle on board an aircraft. The lateral wall can also be referred to as side wall or lateral side wall.

The term "bracket arrangement" relates to several mounts or holders for temporarily mounting the upper support in a support position. The bracket arrangement 18 can also be referred to as holding arrangement or mounting arrangement. The bracket arrangement 18 can also be referred to as set of brackets.

The term "brackets" relates to holders for temporarily fixing the upper support like a rail. The brackets 34 can also be referred to as mounts.

The term "upper support" relates to a support above the user when the user is sitting on the toilet. The term "above" relates to a position higher than the user's head, but still low enough that a user can grasp the support with his or her hand. As an example, the upper support 20 is providable in a height of e.g. minimum 120 cm, e.g. minimum 125 cm, e.g. minimum 130 cm, e.g. minimum 135 cm, e.g. minimum 140 cm, e.g. minimum 145 cm, e.g. minimum 150 cm, e.g. minimum 155 cm, e.g. minimum 160 cm, e.g. minimum 165 cm, e.g. minimum 170 cm, e.g. minimum 175 cm, e.g. minimum 180 cm, e.g. minimum 185 cm, e.g. minimum 190 cm, e.g. minimum 195 cm, e.g. minimum 200 cm, or e.g. minimum 205 cm.

In an option, the upper support is provided vertically above the toilet. In a variation, the upper support is provided vertically above the center of the toilet seat. In another variation, the upper support is provided vertically above the front half of the toilet seat. In a further variation, the upper support is provided vertically above the front edge of the toilet seat.

In another option, the upper support is provided vertically above a region in front of the toilet seat. In a variation, the upper support is provided displaced to the front edge of the toilet seat for about 5 cm. In a variation, the upper support is provided displaced to the front edge of the toilet seat for about 10 cm. In a variation, the upper support is provided displaced to the front edge of the toilet seat for about 15 cm. In a variation, the upper support is provided displaced to the front edge of the toilet seat for about 20 cm. In a variation, the upper support is provided displaced to the front edge of the toilet seat for about 25 cm.

The lavatory 10 is provided as a modifiable lavatory that can be turned into a lavatory for use by passengers with reduced mobility (PRM). The lavatory 10 is provided as a lavatory of an aircraft for use by passengers with reduced mobility. The upper support, e.g. a handrail, can be temporary mounted above a user's head to provide a hanging support to the user can when the user is sitting on the toilet. The handrail can be mounted and removed in a facilitated manner such that a reconfiguration of the lavatory even on a short-term note is provided.

In an example, the housing structure 16 is enclosing the lavatory space 12 partly: For example, a first lateral side, a second lateral side and a front wall are provided. A lavatory door may be provided in the front wall to allow access from an aisle or other movement area of the cabin. On the rear side, an inner cabin lining mounted to the fuselage forms the enclosing part towards the rear. Further, a ceiling of the lavatory may also be provided by an inner cabin lining.

In another example, the housing structure is enclosing the lavatory space completely. For example, a first lateral side, a second lateral side, a front wall, a rear side and a ceiling are provided. A door may be provided in the front wall.

In an option of the example of Fig. 1, the lavatory 10 further comprises the upper support 20 for a user sitting on the toilet. The upper support 20 is provided as a handrail that can be releasably connected to the bracket arrangement 18.

Fig. 1b schematically shows the example of Fig. 1a with a temporarily mounted handrail as the upper support 20.

As an option, at least a main portion 36 of the handrail runs in an essentially horizontal manner when the handrail is temporarily mounted.

As an option, the main portion of the handrail runs transverse to a direction of the toilet when the handrail is temporarily mounted.

In the example shown, the lavatory space has a sort of longitudinal extension and the toilet is aligned with its main direction of use. The lavatory extension runs transverse to an aisle area, i.e. the door is on the front side opposite the toilet. The handrail runs transverse to a direction of the toilet when the handrail is temporarily mounted. The handrail therefore runs parallel to an aisle direction, i.e. parallel to the door.

In another example, not shown, the lavatory space has a sort of longitudinal extension and the toilet is aligned with its main direction of use. However, the lavatory extension runs parallel to an aisle area, i.e. the door is on a lateral side with regards the toilet direction. In such case, the upper support 20 is arranged accordingly, i.e. the handrail runs transverse to a direction of the toilet when the handrail is temporarily mounted. The handrail therefore runs transvers to an aisle direction, i.e. transverse to the door.

In another example, also not shown, the lavatory space does not have a longitudinal extension, but is rather square. In such case, the upper support 20 is arranged according to the toilet direction, i.e. the handrail runs transverse to a direction of the toilet when the handrail is temporarily mounted.

In a variation, the toilet is arranged inside the lavatory space in an inclined manner. In such case, in an option, the upper support 20 is arranged according to the toilet direction, i.e. the handrail runs transverse to a direction of the toilet when the handrail is temporarily mounted. In another option, the upper support 20 is arranged according to the lavatory space extension, e.g. the upper support 20 runs transverse the lavatory space.

As an option, the main portion 36 of the upper support 20 is held in a torque proof manner when the handrail, i.e. the upper support 20 is temporarily mounted.

The term "handrail" relates to a portion that the user can grasp as a sort of grip or handle. The user can reach upwards to grasp the handrail.

The term "main portion" relates to a primary part of the handrail that is mainly used, i.e. most of the times when used e.g. by users with reduced mobility.

The term "horizontal" relates to an essentially horizontal extension when the lavatory's floor is more or less horizontal, e.g. resting on a horizontal floor plane. The term horizontal comprises a parallel alignment with the cabin floor, but also deviations of up to +/-5°, or up to +/- 10° or even up to +/- 15°.

The term "transverse" relates to a direction approximately rectangular in wider sense, like with a deviation to the 90° rectangular direction of +/- 5°, +/- 10°, +/- 15°, +/- 20°, +/- 25° +/- 30°, +/- 35°, +/- 40° or even +/- 45°.

The term "aligned" relates to a direction parallel in wider sense, like with a deviation to the parallel alignment of +/- 5°, +/- 10°, +/- 15°, +/- 20°, or +/- 25°.

The term "torque proof" relates to a fixation against a relative rotation. As an example, the shape of the brackets or holder prevents rotation of the rail. In an example, the rail has a cross section that can engage with a matching receiving portion of the brackets to provide a non-rotatable hold of the rail. In another example, the rail is provided with an interface configured for engaging with a matching receiving counter-interface of the brackets to provide a non-rotatable hold of the rail. The rail itself can then have a round cross section.

In a first variation, the handrail is provided as a rigid rail segment.

In a second variation, the handrail is provided as a flexible element like a rope spanning between two attachment points.

In a third variation, the handrail is provided as a rigid rail segment in parallel to a flexible rope spanning between two attachment points. The rope can also be attached to the rigid rail segment.

In an additional option, a grid of handles is provided above the toilet to provide numerous grasping options for the user. In an example, the grid can be temporarily mounted, e.g. lowered down from an upper storage position. In another example, the grid is temporarily installed. The grid can be a rigid grid or a flexible grid like a net.

The user can grasp the handrail and use it for layawaying along the handrail when moving e.g. from a wheelchair to the toilet seat and vice versa, or from the wheelchair to the toilet seat via a transfer seat, and vice versa.

The direction of the toilet is the longitudinal direction of the toilet seat that defines a viewing direction of a user when sitting on the toilet.

Fig. 2a schematically shows a plan view of another example of a lavatory. The lavatory 10, or lavatory arrangement, further comprises a second lavatory 40 providing a second lavatory space 42. As an option, a second toilet 44 is provided. An at least partly movable partition wall 46 (indicated with a dotted line in Fig. 2a) is provided between the first lavatory space 12 and the second lavatory space 42. As an example, the partition wall 46 comprises several wall sections from which one segment may comprise a lower part 48 that remains. The partition wall 46 is designed to be brought to an opening position, as shown in Fig. 2a, in which a separation between the first lavatory space 12 and the second lavatory space 42 is at least partly cancelled to form a common enlarged lavatory space 50. The upper support 20 is configured to span from the space of the first lavatory space 12 at least partly into the space of the second lavatory space 42.

The lavatory is thus having two adjacent lavatory spaces separated by an at least partly removable partition wall with a bracket arrangement for a temporary mount of an upper support for a user sitting on the toilet.

Fig. 2b schematically shows the example of Fig. 2a with a temporarily mounted handrail as the upper support.

The term "second lavatory space" relates to a further, adjacent lavatory. The second lavatory can have the same orientation or can be arranged in a transverse manner.

The term "movable partition wall" relates to a wall between the first and the second lavatory that provides a separation of the two spaces in a first mode and that provides a connection of the two spaces in a second mode such that a user with reduced mobility has more available space when using the lavatory. For example, the additional space can be used for arranging a wheelchair within the lavatory to transfer from the wheelchair to the toilet inside the closed lavatory. As an option, also space for an accompanying person, also referred to as a support person or assisting person, is provided that can assist during the use of the lavatory.

In an option, the bracket arrangement 18 comprises at least one bracket 34 on a lateral wall of the first lavatory space 12, and at least one bracket 34 on a lateral wall of the second lavatory space 42. The upper support 20 is configured to span from the lateral wall of the first lavatory space 12 to the lateral wall of the second lavatory space 42. The upper support 20 thus spans across the common enlarged lavatory space 50. In an option, the upper support 20 is a handrail.

In an example, the upper support 20 comprises a handrail spanning across the complete width of the common enlarged lavatory space 50. In an option, the handrail is linear and spans transverse, e.g. orthogonal or inclined, but in a horizontal manner.

In another example, a transfer seat function is provided within the second lavatory space. For example, a foldable seat is provided, or the second toilet acts as transfer seat. The upper support 20 is provided above a user when sitting on the transfer seat such that the upper support can be grasped by the user for partly pulling up for an easier transfer from the transfer seat to the toilet of the first lavatory space.

In an option, the upper support 20 is also arranged to provide an upper supporting handle for a person transferring from a wheelchair to the toilet of the first lavatory space and vice versa, or from the wheelchair to the transfer seat and then to the toilet of the first lavatory space and vice versa.

The first lavatory space 12 and the second lavatory space 42 are arranged adjacent to each other, sharing the partition wall 46.

The lateral wall of the first lavatory space 12 refers to a first side wall opposite the movable partition wall 46. The first side wall can thus also be referred to as first outer lateral wall.

The lateral wall of the second lavatory space 42 refers to a second side wall opposite the movable partition wall 46. The second side wall can thus also be referred to as second outer lateral wall.

In an example, the second lavatory space 42 comprises the second toilet 44. A washbasin can be provided in addition.

In another example, the second lavatory space 42 comprises a urinal. A washbasin can be provided in addition.

In a further example, the second lavatory space 42 comprises only a washbasin.

In a still further example, the second lavatory space 42 comprises a shower arrangement. A washbasin can be provided in addition.

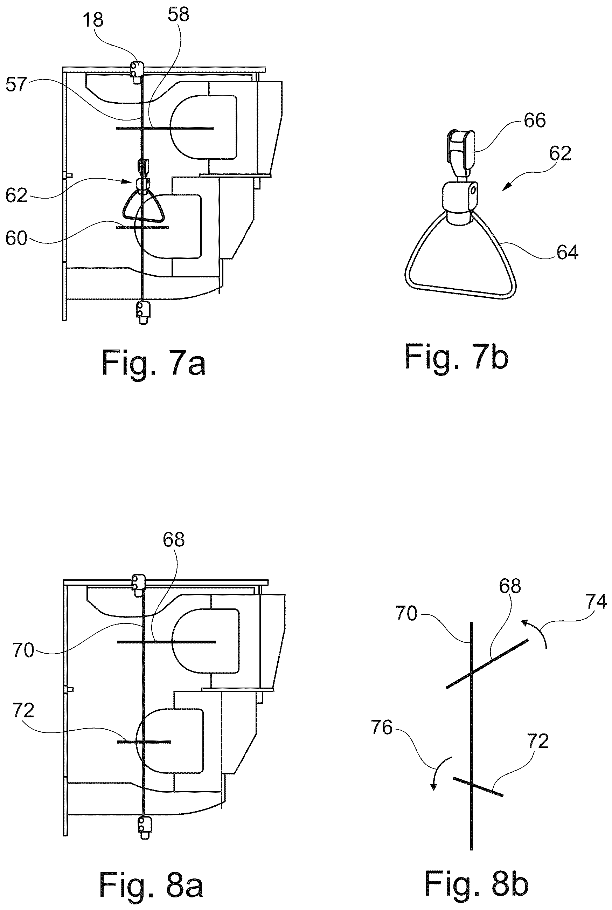

In an option (see also Fig. 7a or Fig. 8a), a first secondary rail section is provided above the toilet of the first lavatory space 12, and a second secondary rail section is provided above a transfer seat or a toilet in the second lavatory space 42.

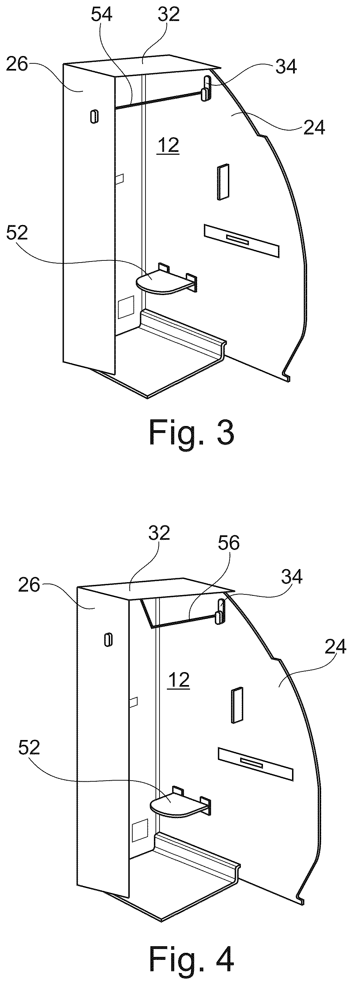

Fig. 3 shows a perspective view of another example of the lavatory 10 with a temporarily mounted handrail 54 as the upper support 20. One of the at least two brackets 34 is mounted to the first lateral wall segment 24 and the other one of the at least two brackets 34 is mounted to the second lateral wall segment 26. The upper support 20 is spanning across the lavatory space 12. The term "spanning across" relates to an extension across the space, i.e. from side to side.

Fig. 4 shows a perspective view of the lavatory 10 of Fig. 3 with another example of a temporarily mounted handrail 56 as the upper support 20. One of the at least two brackets 34 is mounted to the first lateral wall segment 24, or to the second lateral wall segment, and the other one of the at least two brackets 34 is mounted to the lavatory ceiling segment 32. The upper support 20 is spanning across a part of the lavatory space 12. The term "spanning across a part of" relates to an extension across a part of the space, i.e. not from side to side, but rather from one side into a middle area.

In a first option, the handrail is running in a linear manner to provide a main portion that is oriented horizontally when temporarily mounted.

In a second option, the handrail is spanning in an angular manner to provide a main portion that is oriented horizontally when temporarily mounted.

In another example, not shown, for providing a temporarily mounted handrail as the upper support 20, one of the at least two brackets 34 is mounted to the lavatory ceiling segment 32 and the other one of the at least two brackets 34 is also mounted to the lavatory ceiling segment 32. The upper support 20 is then spanning across a part of the lavatory space 12, suspended from the lavatory ceiling segment 32.

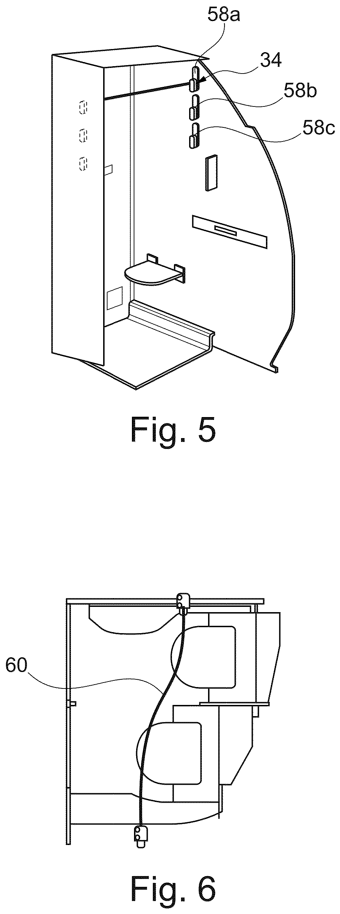

Fig. 5 shows a perspective view of the lavatory 10 of Fig. 3 and Fig. 4. The bracket arrangement 18 is configured for temporarily mounting the handrail in at last two different heights. As an option, a bracket 34 with a plurality of holders for temporarily mounting the handrail as the upper support 20 in different heights is provided. The term "different heights" relates to different vertical positions in relation to a user. As an example, a bracket comprising a first holder 58a, a second holder 58b and a third holder 58c is provided on each side.

As an option, two or more brackets are provided on each side at different heights.

As a further option, each bracket 34 comprises a base part fixedly mounted to the wall and a movable support part for holding the rail or upper support. The movable support part can be a sliding support part that can be locked in different heights or a support part that can be inserted into different openings or recesses of the base part at different heights.

In another option, in addition or alternatively, the handrail is height adaptable itself.

In another option, not shown in detail, the bracket arrangement 18 comprises a movable support for the handrail, i.e. for the upper support 20. The handrail is movable between a parking position and the support position. The handrail can be fixed in the support position. The term "movable support" relates to a mount that allows a relative movement of the handrail in relation to the segment to which the support is fixedly mounted. The relative movement can be a rotation, a translation or a combination thereof. The term "parking position" relates to a position in which the support is moved out of the space used by the user and his/her movements inside the lavatory. For example, the parking position is above the expected user's maximum height, such as close to the ceiling. For example, the parking position outside the expected user's movement space, such as close to the rear wall, or close to the side wall or front wall. The term "support position" relates to a position of the support in which the user can grasp the support when sitting on the toilet. The support position can also be referred to as use position. The parking position can also be referred to as storage position, stowage position or non-use position.

In an example, the handrail can be locked in the parking position by a latch arrangement operable by staff/crew members.

In an example, the handrail is pivotably mounted and can be pivoted from the parking position in the ceiling area downwards into the use position.

In another example, the handrail is slidably mounted and can be translated from the parking position in the ceiling area downwards into the use position.

In an option, the handrail has an ergonomic shape and diameter that it can be easily grabbed by the user.

The handrail is preferably provided with a washable surface. The material is preferably suitable for a facilitated sanitizing procedure.

Fig. 6 shows a plan view of another example of the lavatory 10 of Fig. 2a and Fig. 2b. The upper support 20 comprises a handrail 60 spanning across the complete width of the common enlarged lavatory space. The handrail 60 is curved such that, along its extension, it is arranged in different depths of the common enlarged lavatory space.

The term "curved" relates to a non-linear handrail with sections having different orientations. For example, an S-shaped curve can be provided in which a first section is arranged above the first toilet, e.g. the first section being transverse to a direction of the first toilet, followed by a bending section that provides a transition to a second section that is arranged above the second toilet, e.g. the second section being transverse to a direction of the second toilet.

In an option, the handrail is polygonal such that, along its extension, it is arranged in different depths of the common enlarged lavatory space.

In an option, the second lavatory space 42 is provided with a smaller depth and a toilet in the second lavatory space 42 is arranged in relation to the toilet of the first lavatory space 12 in a displaced manner closer to the entry side of the lavatory. The curved handrail is curved such that it is arranged above similar portions of the toilet belonging to the second lavatory space 42 and the toilet belonging to the first lavatory space 12.

Fig. 7a shows a plan view of another example of the lavatory 10. The upper support 20 comprises a support bar 57 that can be releasably connected to the bracket arrangement 18. In a first option, a first secondary rail section 58 is attached to the support bar 57. The secondary rail section 58 is running aligned above the toilet, for example the first toilet 14, when temporarily mounted. In a variation, as shown, a second secondary rail section 60 is attached to the support bar 62. In a second option, in addition or alternatively, a hanging handle portion 62 is suspended from the support bar 57.

Fig. 7b shows the hanging handle portion 62 of Fig. 7a in more detail. A triangular handle section 64 is mounted to the support bar 57 with a connector 66.

Fig. 8a shows a plan view of another example of the lavatory 10 having a main rail 70 and movable secondary rail portions 68, 72. Fig. 8b shows the moving rail portions of Fig. 8a in more detail. A first arrow 74 indicates a pivoting motion of the first secondary rail portion 68, and a second arrow 76 indicates a pivoting motion of the second secondary rail portion 72

The term "support bar" relates to a bar or rail that provides the bearing or support for e.g. a secondary rail.

The term "aligned above" relates to e.g. an orientation parallel to a direction of the toilet as defined by its intended primary use.

The term "hanging handle portion" relates to a support in form of a handle suspended from the support bar.

In an example, the secondary rail section runs transverse to the main direction of the upper support. The secondary rail section forms a cross rail. In an option, a first secondary rail section is provided above the toilet of the first lavatory space, and a second secondary rail section is provided above a transfer seat next to the toilet.

As an example, a triangular shaped handle is hanging from the support bar.

In an example, the support bar is provided as a handrail.

In an option, the secondary rail section is mounted to the primary rail section in a pivotable manner such that it can be pivoted in a horizontal plane.

In an option, a stowage compartment for the upper support 20 is provided accessible from within the lavatory space. The stowage compartment may be lockable to be operated by crew members only. In another option, a stowage compartment for the upper support 20 is provided outside the lavatory space.

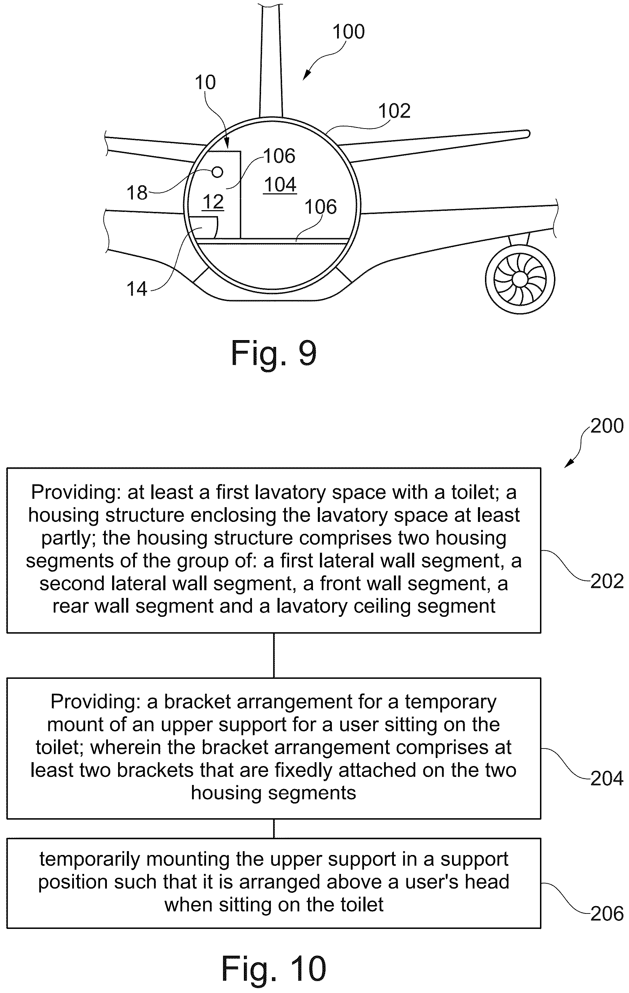

Fig. 9 shows a cross section of an aircraft 100. The aircraft 100 comprises a fuselage 102 enclosing a cabin structure 104. The cabin structure 104 comprises a lavatory arrangement 106. The lavatory arrangement 106 comprises at least one example of the lavatory 10 according to one of the examples above.

Fig. 10 shows basic steps of an example of a method 200 for temporarily modifying a lavatory of an aircraft for a use by passengers with reduced mobility. The method 200 comprises the following steps:
- In a first step 202, it is provided: at least a first lavatory space with a toilet; and a housing structure enclosing the lavatory space at least partly. The housing structure comprises two housing segments of the group of: a first lateral wall segment, a second lateral wall segment, a front wall segment, a rear wall segment and a lavatory ceiling segment.
- In a second step 204, it is provided: a bracket arrangement for a temporary mount of an upper support for a user sitting on the toilet. The bracket arrangement comprises at least two brackets that are fixedly attached on the two housing segments.
- In a third step 206, the upper support is temporarily mounted in a support position such that it is arranged above a user's head when sitting on the toilet.

This provides a facilitated transfer from a lavatory into a lavatory suitable for passengers with reduced mobility.

It has to be noted that embodiments of the invention are described with reference to different subject matters. In particular, some embodiments are described with reference to method type claims whereas other embodiments are described with reference to the device type claims. However, a person skilled in the art will gather from the description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A lavatory (10) of an aircraft cabin, comprising:
- at least a first lavatory space (12) with a toilet (14);
- a housing structure (16) enclosing the lavatory space at least partly; and
- a bracket arrangement (18) for a temporary mount of an upper support (20) for a user sitting on the toilet;
wherein the housing structure comprises at least one housing segment (22) of the group of: a first lateral wall segment (24), a second lateral wall segment (26), a front wall segment (28), a rear wall segment (30) and a lavatory ceiling segment (32); and
wherein the bracket arrangement comprises at least two brackets (34) that are fixedly attached on the at least one housing segment such that the upper support can be temporarily mounted in a support position such that it is arranged above a user's head when sitting on the toilet.

2. Lavatory according to claim 1, further comprising the upper support for a user sitting on the toilet;
wherein the upper support is provided as a handrail that can be releasably connected to the bracket arrangement;
wherein at least a main portion (34) of the handrail runs in an essentially horizontal manner when the handrail is temporarily mounted;
wherein the main portion of the handrail runs transverse to a direction of the toilet when the handrail is temporarily mounted; and
wherein the main portion is held in a torque proof manner when the handrail is temporarily mounted.

3. Lavatory according to claim 1 or 2, wherein:
i) one of the at least two brackets is mounted to the first lateral wall segment and the other one of the at least two brackets is mounted to the second lateral wall segment; wherein the upper support is spanning across the lavatory space; or
ii) one of the at least two brackets is mounted to the first or second lateral wall segment, and the other one of the at least two brackets is mounted to the lavatory ceiling segment; wherein the upper support is spanning across a part of the lavatory space; or
iii) one of the at least two brackets is mounted to the lavatory ceiling, and the other one of the at least two brackets is also mounted to the lavatory ceiling segment; wherein the upper support is spanning across a part of the lavatory space.

4. Lavatory according to claim 1, 2 or 3, wherein the bracket arrangement is configured for temporarily mounting the handrail in at least two different heights.

5. Lavatory according to one of the preceding claims, wherein the bracket arrangement comprises a movable support for the handrail;
wherein the handrail is movable between a parking position and the support position; and
wherein the handrail can be fixed in the support position.

6. Lavatory according to one of the preceding claims, wherein the upper support comprises a support bar that can be releasably connected to the bracket arrangement; and
wherein:
i) a secondary rail section (58, 60) is attached to the support bar, the secondary rail section running aligned above the toilet when temporarily mounted; and/or
ii) a hanging handle portion (62) suspended from the support bar.

7. Lavatory according to one of the preceding claims, further comprising:
- a second lavatory space (42);
wherein an at least partly movable partition wall (46) is provided between the first and the second lavatory space;
wherein the partition wall is designed to be brought to an opening position in which a separation between the first lavatory space and the second lavatory space is cancelled to form a common enlarged lavatory space; and
wherein the upper support is configured to span from the space of the first lavatory space at least partly into the space of the second lavatory space.

8. Lavatory according to claim 7, wherein the upper support comprises a handrail spanning across the complete width of the common enlarged lavatory space; and
wherein the handrail is curved such that, along its extension, it is arranged in different depths of the common enlarged lavatory space.

9. An aircraft (100), comprising:
- a fuselage (102) enclosing a cabin structure (104);
wherein the cabin structure comprises a lavatory arrangement; and
wherein the lavatory arrangement comprises at least one lavatory (10) according to one of the preceding claims.

10. A method (200) for temporarily modifying a lavatory of an aircraft for a use by passengers with reduced mobility, the method comprising the following steps:
- providing (202): at least a first lavatory space with a toilet; a housing structure enclosing the lavatory space at least partly; wherein the housing structure comprises two housing segments of the group of: a first lateral wall segment, a second lateral wall segment, a front wall segment, a rear wall segment and a lavatory ceiling segment;
- providing (204) a bracket arrangement for a temporary mount of an upper support for a user sitting on the toilet; wherein the bracket arrangement comprises at least two brackets that are fixedly attached on the two housing segments; and
- temporarily mounting (206) the upper support in a support position such that it is arranged above a user's head when sitting on the toilet.
